# EUROPEAN PATENT SPECIFICATION

(11) **EP 3 993 366 B1**
(45) Date of publication and mention of the grant of the patent: **24.01.2024**
(21) Application number: 22156714.2
(22) Date of filing: 15.02.2022
(51) Int. Cl.: H04L 47/125, H04L 49/00, H04L 49/50, H04L 49/253

(54) **NETWORK LOAD BALANCER, REQUEST MESSAGE DISTRIBUTION METHOD, PROGRAM PRODUCT AND SYSTEM**
NETZWERKLASTVERTEILER, ABFRAGEMELDUNGSVERTEILUNGSVERFAHREN, COMPUTERPROGRAMMPRODUKT UND SYSTEM
ÉQUILIBREUR DE CHARGE RÉSEAU, PROCÉDÉ DE DÉLIVRANCE DE MESSAGE DE REQUÊTE, PRODUIT PROGRAMME INFORMATIQUE ET SYSTÈME

(30) Priority: 22.06.2021 CN 202110695011
(43) Date of publication of application: 04.05.2022
(73) Proprietor: BEIJING BAIDU NETCOM SCIENCE TECHNOLOGY CO., LTD., Beijing 100085 (CN)
(72) Inventor: PAN, Weiping, Beijing (CN); GONG, Zhimin, Beijing (CN); CHENG, Gang, Beijing (CN); WANG, Feitong, Beijing (CN); WANG, Wei, Beijing (CN)
(74) Representative: J A Kemp LLP

(56) References cited:
- CN-A- 111 355 674
- US-A1- 2009 316 700

## Description

### TECHNICAL FIELD

The present disclosure relates to cloud computing technology in computer technology, and more particularly to a network load balancer, a request message distribution method, a program product and a system.

### BACKGROUND

A network load balancer is a basic network facility of a cloud computing data center, and is responsible for evenly distributing massive network requests to multiple back-end servers, thereby improving the overall handling ability of the back-end server cluster.

In a typical Internet service system architecture, the network load balancer is an entrance of network service traffic, and all network service requests will be forwarded through the network load balancer, which brings a great challenge to the performance of the network load balancer. If the performance of a single network load balancer cannot meet the demand, multiple network load balancers need to be deployed at the same time for parallel processing.

However, the deployment of multiple network load balancers will increase the cost of the system, and the processing performance of the single network load balancer is low. If the processing ability of the single network load balancer is saturated, it is apt to cause packet loss problems, thereby affecting the quality of network services.

CN111355674A discloses a processing method and device for routing message that the routing messages to be forwarded are matched in turn through multiple chips in the chipset, and the routing messages to be forwarded are forwarded according to the matching results.

US2009/316700A1 discloses a method, system and device associated with cascaded memory tables. The method decodes a network packet to determine a destination address. A first address table is searched for an address matching the destination address. If the matching address is not found, the serially connected second address table is searched for an address matching the destination address. If the destination address is found, the network packet is transmitted to a destination port corresponding to the destination address.

### SUMMARY

The present disclosure is set out in the appended set of claims. The present disclosure provides a network load balancer, a request message distribution method, a program product and a system, so as to improve the processing performance of the network load balancer.

According to a first aspect of the present disclosure, there is provided a network load balancer, including: a network port and N intermediate chips; the N intermediate chips are connected in sequence; the network port is connected to a first intermediate chip among the N intermediate chips; N is a positive integer greater than or equal to 1;
the network port is configured to receive a request message and forward the request message to the first intermediate chip;
each of the intermediate chips is configured to forward the request message to a next intermediate chip connected to a current intermediate chip if connection information matching the request message is not found; and transmit the request message to a background server according to the connection information if the connection information matching the request message is found.

According to a second aspect of the present disclosure, there is provided a request message distribution method applied to a network load balancer, the network load balancer includes: a network port and N intermediate chips; the N intermediate chips are connected in sequence; the network port is connected to a first intermediate chip among the N intermediate chips; N is a positive integer greater than or equal to 1; the method includes:
receiving, by the network port, a request message, and forwarding, by the network port, the request message to the first intermediate chip;
forwarding, by the intermediate chip, the request message to a next intermediate chip connected to a current intermediate chip if connection information matching the request message is not found; and transmitting, by the intermediate chip, the request message to a background server according to the connection information if the connection information matching the request message is found.

According to a third aspect of the present disclosure, there is provided a non-transitory computer-readable storage medium storing computer instructions, where the computer instructions are used to cause a computer to execute the method described in the second aspect.

According to a fourth aspect of the present disclosure, there is provided a computer program product, the computer program product includes: a computer program stored in a readable storage medium, and at least one processor of a network load balancer can read the computer program from the readable storage medium, and the at least one processor executes the computer program to cause the network load balancer to execute the method described in the second aspect.

According to a fifth aspect of the present disclosure, there is provided a service system, including: the network load balancer as described in the first aspect and a cluster server, where the cluster server includes a background server;
the network load balancer is configured to receive a request message transmitted by a user terminal, and determine a target background server used to process the request message in the cluster server;
the network load balancer is further configured to transmit the request message to the target background server.

The present disclosure provides a network load balancer, a request message distribution method, a program product and a system. The network load balancer include: a network port and N intermediate chips; the N intermediate chips are connected in sequence; the network port is connected to a first intermediate chip among the N intermediate chips; N is a positive integer greater than or equal to 1; the network port is configured to receive a request message and forward the request message to the first intermediate chip; each of the intermediate chips is configured to forward the request message to a next intermediate chip connected to a current intermediate chip if connection information matching the request message is not found; and transmit the request message to a background server according to the connection information if the connection information matching the request message is found. In the solution provided by the present disclosure, the processing of the request message is transferred to the intermediate chip for processing, so that the request message is directly processed by hardware, thereby improving the performance of the entire network load balancer.

It should be understood that the content described in this section is not intended to identify key or important features of embodiments of the present disclosure, nor is it intended to limit the scope of the present disclosure. Other features of the present disclosure will become apparent from the following description.

### BRIEF DESCRIPTION OF DRAWINGS

The attached drawings are used for a better understanding of the solution and do not constitute a limitation of the present disclosure, where:
FIG. 1 is an architecture diagram of a cloud service system shown in an exemplary embodiment of the present disclosure;
FIG. 2 is a structural schematic diagram of a network load balancer shown in an exemplary embodiment of the present disclosure;
FIG. 3 is a schematic flowchart of processing a request message by a network load balancer shown in an exemplary embodiment of the present disclosure;
FIG. 4 is a schematic flowchart of querying connection information by an intermediate chip shown in an exemplary embodiment of the present disclosure;
FIG. 5 is a schematic flowchart of processing a request message by a network load balancer shown in another exemplary embodiment of the present disclosure;
FIG. 6 is a schematic diagram of processing a request message shown in a first exemplary embodiment of the present disclosure;
FIG. 7 is a schematic diagram of processing a request message shown in a second exemplary embodiment of the present disclosure;
FIG. 8 is a schematic diagram of processing a request message shown in a third exemplary embodiment of the present disclosure;
FIG. 9 is a schematic diagram of processing a request message by the network load balancer shown in a fourth exemplary embodiment of the present disclosure;
FIG. 10 is a schematic diagram of processing a request message by a network load balancer shown in a fifth exemplary embodiment of the present disclosure;
FIG. 11 is a schematic diagram of processing a request message by a network load balancer shown in a sixth exemplary embodiment of the present disclosure; and
FIG. 12 is a schematic diagram of processing a request message by a network load balancer shown in a seventh exemplary embodiment of the present disclosure.

### DESCRIPTION OF EMBODIMENTS

Exemplary embodiments of the present disclosure are described below with reference to the drawings, including various details of the embodiments of the present disclosure to facilitate understanding, which should be considered as merely exemplary. Therefore, those of ordinary skill in the art should recognize that various changes and modifications can be made to the embodiments described herein without departing from the scope of the present disclosure. Likewise, for the sake of clarity and conciseness, descriptions of well-known functions and structures are omitted in the following description.

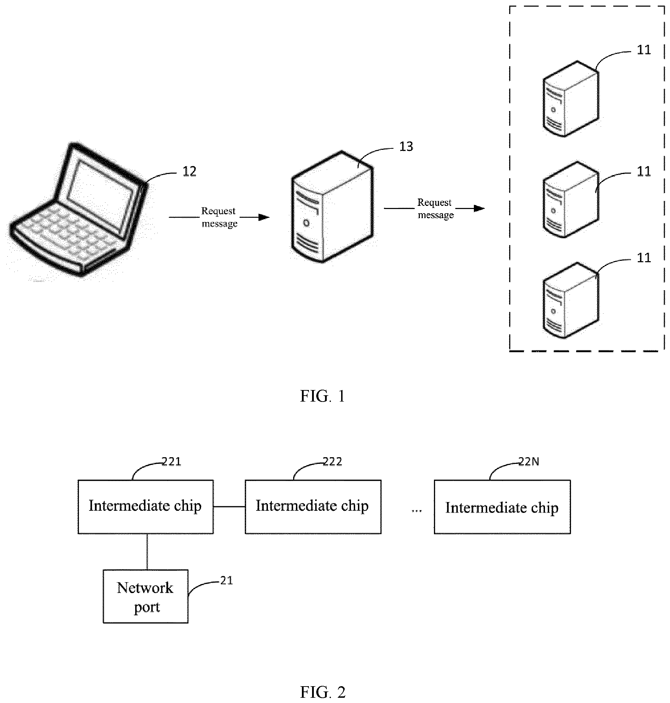

FIG. 1 is an architecture diagram of a cloud service system shown in an exemplary embodiment of the present disclosure.

As shown in FIG. 1, in the cloud service system architecture, multiple back-end servers 11 may be provided, and these back-end servers 11 can process a request transmitted by a user terminal 12 and feedback a processing result, thereby providing external services.

Since the multiple servers 11 are provided to provide external services, after the user terminal 12 transmits a request message, the request message needs to be distributed to a certain background server 11 through the network load balancer 13, so as to balance request messages processed by the background servers 11.

At present, cloud data centers widely adopt software load balancers based on ordinary servers, and the performance of a single device is 10G-100G. With the development of cloud computing services, network traffic brought by service access within a cloud data center and between data centers is increasing, and a bandwidth of the traffic usually reaches a Tbps (mega) level. However, a single network load balancer obviously cannot meet the bandwidth requirements. Therefore, dozens or even hundreds of network load balancers needs to be deployed for a single server cluster. If multiple server clusters are deployed, it will even cost thousands of machines.

It will cause more new problems by simply adding a network load balancer to solve the problem of traffic increasement. The first is cost--taking up a large number of machines will bring high costs; the second is operation and maintenance--the more machines deployed, the more difficult the operation and maintenance. The last is a service quality--due to a low processing performance of a single device, burst traffic in the network can easily fill up the processing ability of a single device, causing packet loss and affecting a quality of a network service. Therefore, improving the performance of a single network load balancer is of great significance to solve the problems of cost, operation and maintenance, and service quality of the load balancing service.

In order to solve the above technical problems, in the solution provided by the present disclosure, N intermediate chips are provided in a network load balancer, and a request message is first processed through these intermediate chips, and if the intermediate chips fail to find connection information of the request message, the processor may process the request message, in this way, a processing pressure of the processor is reduced, the processing performance of the network load balancer is thus improved as a whole.

FIG. 2 is a structural schematic diagram of a network load balancer shown in an exemplary embodiment of the present disclosure.

As shown in FIG. 2, the network load balancer provided by the present disclosure includes a network port 21 and N intermediate chips 221-22N.

Where the intermediate chips are connected in sequence. The network port 21 is connected to a first intermediate chip 221 among the N intermediate chips. N is an integer greater than or equal to 1.

When N is 1, the first intermediate chip and the last intermediate chip are the same intermediate chip.

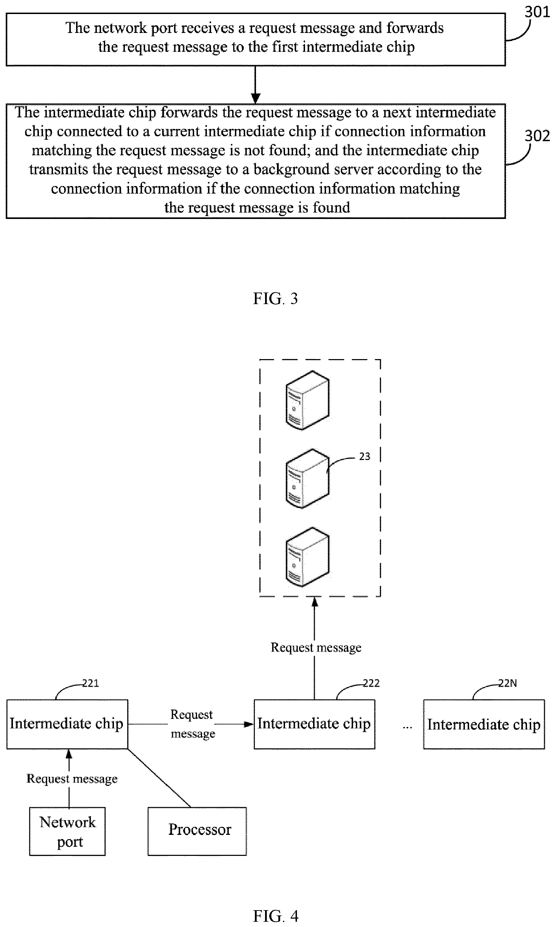

FIG. 3 is a schematic flowchart of processing a request message by a network load balancer shown in an exemplary embodiment of the present disclosure.

As shown in FIG. 3, when the network load balancer provided by the present disclosure processes the request message, the specific processes include:
Step 301: the network port receives a request message and forwards the request message to the first intermediate chip.

Where the network port in the network load balancer is configured to receive the request message. A user terminal can transmit the request message through a network, where the request message is used to access a network service. A service system that provides the network service may be provided with the network load balancer provided by the present disclosure, and further, the network load balancer can receive the request message of the user terminal, specifically the network port of the network load balancer can receive the request message.

Specifically, the network port of the network load balancer is also configured to forward the request message to the first intermediate chip among the N intermediate chips, so that the request message is processed first by the first intermediate chip.

Step 302: the intermediate chip forwards the request message to a next intermediate chip connected to a current intermediate chip if connection information matching the request message is not found; and the intermediate chip transmits the request message to a background server according to the connection information if the connection information matching the request message is found.

Each of the intermediate chips is configured to forward the request message to the next intermediate chip connected to the current intermediate chip if the connection information matching the request message is not found.

Further, the first intermediate chip can query the connection information matching the request message after receiving the request message, and forward the request message to the next intermediate chip if the connection information is not found.

In practical applications, the connection information can be set in each of the intermediate chips, and the connection information in the intermediate chips can be different. The connection information may include address information of a requesting terminal, and the intermediate chip may query the connection information that matches the request message in matching information stored in the intermediate chip according to the information.

Where the intermediate chip is also configured to transmit the request message to the background server according to the connection information if the connection information matching the request message is found.

Therefore, the intermediate chip can transmit the request message to the background server according to the connection information if the connection information matching the request message is found by the intermediate chip.

Specifically, the network load balancer can be connected to a cluster server. The connection information determined by the intermediate chip may include information of the background server, such as an identifier of the background server, so that the intermediate chip can transmit the request message to the background server corresponding to the identifier of the background server.

For example, the intermediate chip can extract an address Address 1 included in the request message, and then, the intermediate chip can query the matching connection information in the locally stored connection information according to the Address 1, for example, it can find that the matching connection information is information 1. Then the intermediate chip can acquire an identifier 1 of the background server included in the information 1, and transmit the request message to the background server with the identifier 1, so as to enable the background server to process the request message.

FIG. 4 is a schematic flowchart of querying connection information by an intermediate chip shown in an exemplary embodiment of the present disclosure.

As shown in FIG. 4, the first intermediate chip 221 can query the connection information matching the request message after receiving the request message. If the query fails, the request message can be forwarded to the next intermediate chip 222, and the next intermediate chip 222 will continue to process the request message.

If the intermediate chip 222 finds the connection information matching the request message in the stored connection information, the intermediate chip 222 may forward the request message to the background server 23 indicated by the connection information.

The network load balancer further includes a processor. If the connection information matching the request message is not found in the intermediate chips, the first intermediate chip among the N intermediate chips forwards the request message to the processor, and the processor is configured to transmit the request message to the background server.

The network load balancer provided by the present disclosure includes: a network port and N intermediate chips; the N intermediate chips are connected in sequence; the network port is connected to a first intermediate chip among the N intermediate chips; N is a positive integer greater than or equal to 1; the network port is configured to receive a request message and forward the request message to the first intermediate chip; each of the intermediate chips is configured to forward the request message to a next intermediate chip connected to a current intermediate chip if connection information matching the request message is not found; and transmit the request message to a background server according to the connection information if the connection information matching the request message is found. In the network load balancer provided by the present disclosure, the processing of the request message is transferred to the intermediate chip for processing, so that the request message is directly processed by hardware, thereby improving the performance of the entire network load balancer.

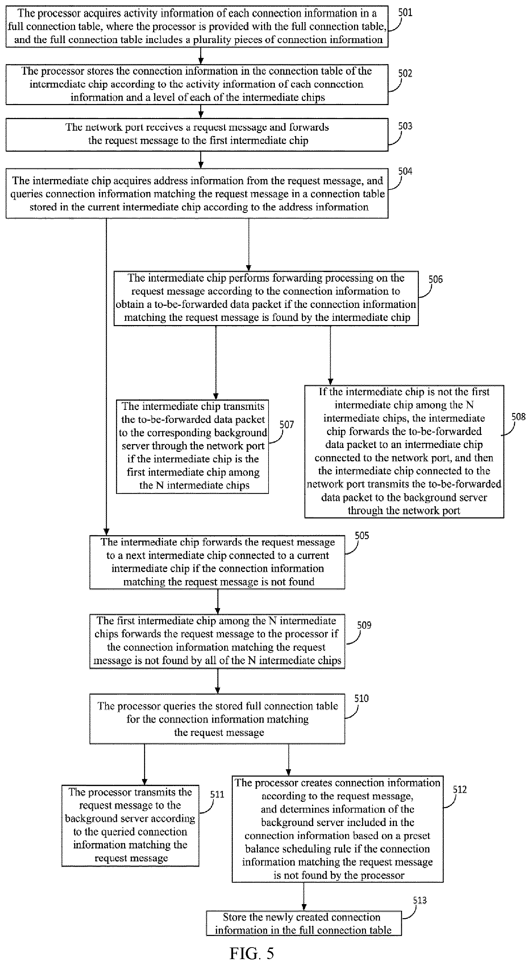

FIG. 5 is a schematic flowchart of processing a request message by a network load balancer shown in another exemplary embodiment of the present disclosure.

The network load balancer further includes a processor.

As shown in FIG. 5, when the network load balancer provided by the present disclosure processes the request message, the specific processes include:
Step 501: the processor acquires activity information of each connection information in a full connection table, where the processor is provided with the full connection table, and the full connection table includes a plurality pieces of connection information.

Where in the solution provided by the present disclosure, the network load balancer may also be provided with the processor, and the full connection table may be provided in the provided processor, and the full connection table includes a plurality pieces of connection information.

Specifically, all the connection information can be stored in the full connection table, including the connection information stored in each of the intermediate chips. For example, the user terminal transmits a request message, the processor can construct the connection information corresponding to the request message, and after the connection is over, the processor can delete the corresponding connection information.

Further, the processor can acquire activity information of each connection information in the full connection table. In one implementation, for a connection of a specific known service type, the processor can directly classify the connection into a certain category, such as an active connection, or a semi-active connection. In another implementation, when the connection is initially started, the processor can determine the connection as an inactive connection, and when information such as the number of packets, the number of bytes, and a duration of the connection processed by the processor reaches a set semi-active connection threshold, the connection is determined as a semi-active connection. If the connection meets a threshold for an active connection, the processor may determine the connection as an active connection.

The processor can acquire the activity information of each connection information.

Step 502: the processor stores the connection information in the connection table of the intermediate chip according to the activity information of each connection information and a level of each of the intermediate chips.

In practical applications, levels of the intermediate chips may be different, and the intermediate chips of different levels are used to store different types of connection information.

Accordingly, the processor is specifically configured to store the connection information in the connection table of the intermediate chip according to the activity information of each connection information and the level of each of the intermediate chips. For example, the corresponding relationship between activity information and levels of a chip can be preset. For example, an activity 1 corresponds to a level 1, and an activity 2 corresponds to a level 2, and then, the processor can store the connection information into the corresponding intermediate chip according to the corresponding relationship.

In practical applications, if two levels of intermediate chips are provided, the processor can characterize the activity information as active connection information and store the activity information in a connection table of a first-level intermediate chip; and characterize the activity information as semi-active connection information and store the activity information in a connection table of a second-level intermediate chip. In this implementation, the first-level intermediate chip can be used to process an active connection, and the second-level intermediate chip can be used to process an inactive connection, so that the network load balancer can process a request message corresponding to the active connection on the first-level intermediate chip, thus improving a processing speed of the request message.

The first-level intermediate chip can be the first intermediate chip among the N intermediate chips, which can be directly connected to a network port, so as to enable the request message to be directly forwarded from the network port to the first-level intermediate chip, in this way, when the connection corresponding to the request message is an active connection, the first-level intermediate chip can directly process the request message.

The first-level intermediate chip can be used to store connection information of active connections, the second-level intermediate chip can be used to store connection information of semi-active connections, and the processor can store all connection information, including inactive connection information.

Where if the connection is active, the processor can transmit the connection information of the connection to the first-level intermediate chip, so that the first-level intermediate chip stores the received connection information in the first connection table; if the connection is semi-active, the processor may transmit the connection information of the connection to the second-level intermediate chip, so that the second-level intermediate chip stores the received connection information in the second connection table.

In this implementation, the information of each connection can be distributed to different intermediate chips based on the activity information of the connections, and then different intermediate chips can process request messages with different activity to improve the processing speed.

In this implementation, the processor can be connected to each of the intermediate chips.

Step 503: the network port receives a request message and forwards the request message to the first intermediate chip.

The implementation and principle of step 503 are similar to those of step 301, and will not be repeated herein.

Step 504: the intermediate chip acquires address information from the request message, and queries connection information matching the request message in a connection table stored in the current intermediate chip according to the address information.

Where any intermediate chip can process the received request message, for example, the first intermediate chip can execute this step.

Specifically, each of the intermediate chips can store connection information. For example, each of the intermediate chips can set a connection table, and the connection information can be stored in the connection table.

The connection information stored in different intermediate chips is also different. The connection table stored in each of the intermediate chips corresponds to each of the intermediate chips one by one, and the connection table stored in the intermediate chip is configured to indicate a corresponding relationship between address information and connection information.

Further, the intermediate chip may extract the address information from the request message, and then query the connection information matching the request message in the stored connection table according to the address information.

The connection information matching the request message is used to indicate the background server that receives the request message. For example, if the connection information includes server identification information, the intermediate chip can forward the request message to a server indicated by the server identification information according to the server identification information in the connection information.

By setting the connection information, the intermediate chip and the processor can determine the background server for processing the request message according to the connection information, and then can directly forward the request message according to the connection information.

In this implementation, the intermediate chip can determine the matching connection information in the stored connection table through an address in the request message, so as to process the request message according to the connection information, and forward the request message to the background server without transferring the request message to the processor, in this way, the processing pressure of the processor is shared through the intermediate chip to improve the performance of the network load balancer.

Step 505: the intermediate chip forwards the request message to a next intermediate chip connected to a current intermediate chip if the connection information matching the request message is not found.

Step 505 is similar to step 302 in terms of the principle and implementation of forwarding the request message, which will not be repeated herein.

Step 506: the intermediate chip performs forwarding processing on the request message according to the connection information to obtain a to-be-forwarded data packet if the connection information matching the request message is found by the intermediate chip.

Where the intermediate chip may perform forwarding processing on the request message (for example, modify a destination IP address in the request message to an address of the background server) if the matching connection information is found by the intermediate chip. In addition, the intermediate chip can also perform other operations according to a type of the background server, such as some other data packet modification operations, for example, if the background server is a virtual machine, VXLAN (Virtual extensible Local Area Network) encapsulation will be performed on the data packet.

Specifically, after the intermediate chip forwards the request message, the to-be-forwarded data packet can be obtained.

Step 507: the intermediate chip transmits the to-be-forwarded data packet to the corresponding background server through the network port if the intermediate chip is the first intermediate chip among the N intermediate chips.

Further, if the first intermediate chip among the N intermediate chips determines the connection information matching the request message, the first intermediate chip may directly forward the to-be-forwarded data packet to the background server through the network port.

In practical applications, the first intermediate chip among the N intermediate chips can be directly connected to the network port, therefore, the first intermediate chip can directly transmit the to-be-forwarded data packet through the network port. Where the destination address in the to-be-forwarded data packet may be the address of the background server determined according to the connection information. Therefore, the to-be-forwarded data packet can be received by the background server indicated by the connection information.

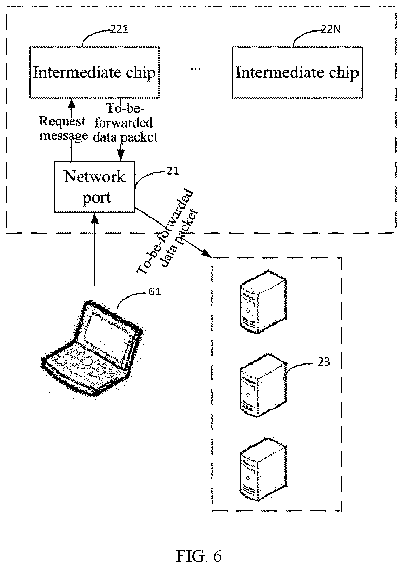

FIG. 6 is a schematic diagram of processing a request message shown in a first exemplary embodiment of the present disclosure.

As shown in FIG. 6, the network load balancer can receive a request message transmitted by a user terminal 61 through the network port 21, and then forward the request message to the first intermediate chip 221 among the N intermediate chips. The first intermediate chip 221 determines connection information matching the request message, and the first intermediate chip 221 can generate a to-be-forwarded data packet, and transmit the to-be-forwarded data packet to the background server 23 through the network port 21.

Step 508: if the intermediate chip is not the first intermediate chip among the N intermediate chips, the intermediate chip forwards the to-be-forwarded data packet to an intermediate chip connected to the network port, and then the intermediate chip connected to the network port transmits the to-be-forwarded data packet to the background server through the network port.

Where if a non-first intermediate chip among the N intermediate chips determines the connection information matching the request message, the intermediate chip may first transmit the to-be-forwarded data packet to the first intermediate chip among the N intermediate chips. Since the first intermediate chip is directly connected to the network port, the first intermediate chip can transmit the to-be-forwarded data packet to the background server through the network port.

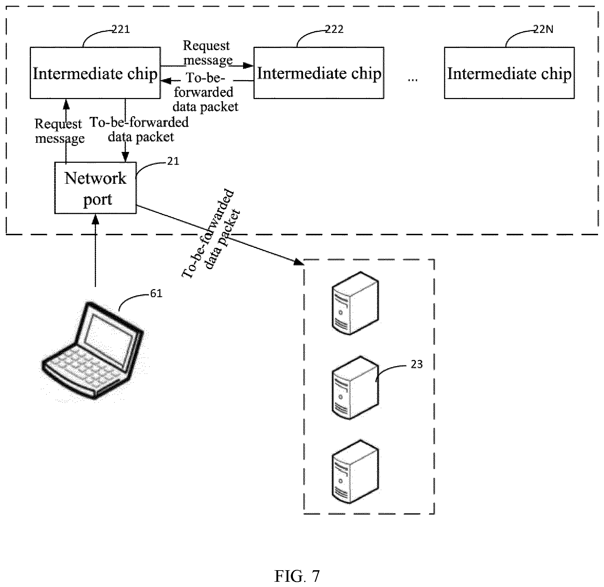

FIG. 7 is a schematic diagram of processing a request message shown in a second exemplary embodiment of the present disclosure.

As shown in FIG. 7, the network load balancer can receive the request message transmitted by the user terminal 61 through the network port 21, and then forward the request message to the first intermediate chip 221 among the N intermediate chips. If the connection information matching the request message is not found by the first intermediate chip 221, the request message can be forwarded to the next intermediate chip 222. If the connection information matching the request message is found by any intermediate chip except the first intermediate chip 221, for example, if the intermediate chip 222 determines the matching connection information, the intermediate chip 222 can generate a to-be-forwarded data packet and transmit the to-be-forwarded data packet to the first intermediate chip 221. Specifically, the to-be-forwarded data packet can be transmitted step by step based on a connection mode of the N intermediate chips, so that the to-be-forwarded data packet can be transmitted to the first intermediate chip 221, thereby enabling the first intermediate chip 221 to transmit the to-be-forwarded data packet to the background server 23 through the network port 21.

In this implementation, since the network load balancer interacts with the outside through the network port, and the first intermediate chip among the N intermediate chips is connected to the network port, therefore the to-be-forwarded data packet is transmitted to the first intermediate chip, thereby realizing the forwarding of the to-be-forwarded data packet to an external background server through the network port.

Step 509 may be executed after step 505.

Step 509: the first intermediate chip among the N intermediate chips forwards the request message to the processor if the connection information matching the request message is not found by all of the N intermediate chips.

The processor is configured to transmit the request message to the background server.

As the intermediate chip forwards the request message step by step, if the request message is forwarded to the last intermediate chip among the N intermediate chips, the last intermediate chip can query the connection information matching the request message in the stored connection information.

The last intermediate chip among the intermediate chips is also used to indicate that the connection information matching the request message is not found by all the intermediate chips if the connection information matching the request message is not found. At this time, the request message can be returned to the first intermediate chip, and further the request message is forwarded to the processor through the first intermediate chip, where the processor is configured to transmit the request message to the background server.

In one implementation, the last intermediate chip may directly transmit the request message to the first intermediate chip, so as to cause the first intermediate chip to transmit the request message to the processor. In another implementation, the request message may be transmitted step by step based on the connection relationship of the N intermediate chips, so that the request message is transmitted to the first intermediate chip among the N intermediate chips.

Specifically, if the connection information matching the request message is not found by an intermediate chip, the intermediate chip forwards the request message to the next intermediate chip. Therefore, the request message may be forwarded to the last intermediate chip.

Further, if the request message is forwarded to the last intermediate chip, it can be considered that none of the previous intermediate chips has the connection information matching the request message.

In practical applications, if the connection information matching the request message is not stored in the last intermediate chip, it can be considered that none of the intermediate chips has the connection information matching the request message. Therefore, the first intermediate chip can forward the request message to the processor of the network load balancer.

Therefore, if no matching connection information is found by the last intermediate chip, the last intermediate chip can transmit the request message to the first intermediate chip, and then the first intermediate chip transmits the request message to the processor of the network load balancer, so that the processor can process the request message.

For example, if the network load balancer receives a new request message, connection information of this request message will not be stored in the intermediate chips. Therefore, the request message will eventually be forwarded to the processor.

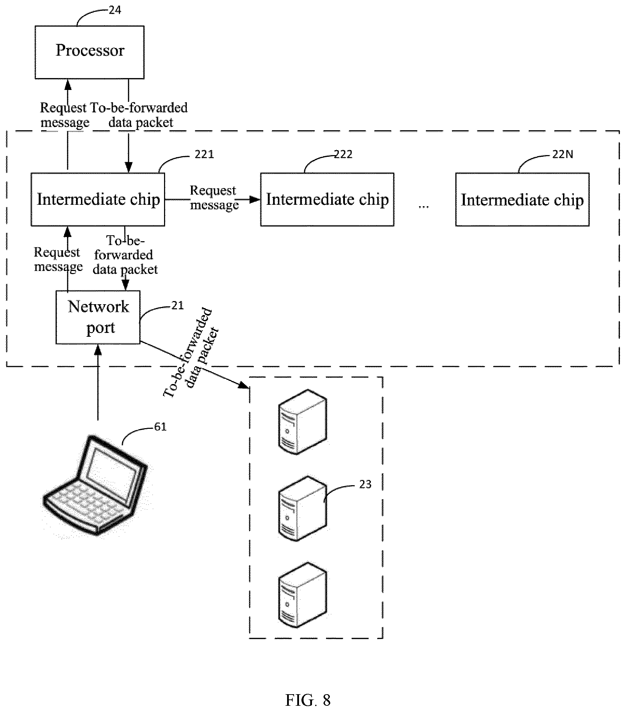

FIG. 8 is a schematic diagram of processing a request message shown in a third exemplary embodiment of the present disclosure.

As shown in FIG. 8, the first intermediate chip 221 can query the connection information matching the request message after receiving the request message. If the query fails, the request message can be forwarded to the next intermediate chip 222, which will continue to process the request message.

If the connection information matching the request message is not found by the intermediate chip 222 in the stored connection information, the intermediate chip 222 will forward the request message to the next intermediate chip again. If none of the intermediate chips 221-(22N-1) stores the connection information matching the request message, the request message will be forwarded to the last intermediate chip 22N among the intermediate chips.

Where the last intermediate chip 22N may continue to perform the step of querying the connection information. If the last intermediate chip 22N does not store the connection information matching the request message, the intermediate chip 22N may transmit the request message back to the first intermediate chip 221, and further the first intermediate chip 221 forwards the request message to the processor 24, so that the processor 24 processes the request message and transmits the request message to the background server 23.

In this implementation, if the connection information of the request message is stored in the intermediate chip, the intermediate chip can transmit the request message to the background server according to the connection information, so that the quantity of the request messages processed by the processor can be reduced, and further the processing pressure of the processor on the request messages can be reduced, therefore, the processing performance of the network load balancer can be improved as a whole.

Step 510: the processor queries the stored full connection table for the connection information matching the request message.

Where the processor can store a full connection table, and the full connection table includes a plurality pieces of connection information. Therefore, the processor can query the full connection table for the connection information matching the request message. Specifically, the address information can be acquired from the request message, and the connection information matching the request message can be queried according to the address information in the full connection table stored in the processor.

Step 511: the processor transmits the request message to the background server according to the queried connection information matching the request message.

Specifically, when transmitting the request message to the background server, the processor can specifically perform forwarding processing on the request message according to the connection information to obtain a to-be-forwarded data packet; and transmits the to-be-forwarded data packet to an intermediate chip connected to the network port, then the intermediate chip connected to the network port transmits the to-be-forwarded data packet to the background server through the network port.

If the connection information matching the request message is found by the processor, the processor may forward the request message to the background server according to the connection information, so that the background server can process the request message.

In this implementation, if no connection information matching the request message is stored in the intermediate chips, the processor can query in the full connection table for the connection information matching the request message. In this implementation, the quantity of request messages processed by the processor can be reduced, thereby improving the processing performance of the processor.

Further, since the network load balancer interacts with the outside through the network port, and the first intermediate chip among the N intermediate chips is connected to the network port, therefore the to-be-forwarded data packet is transmitted to the first intermediate chip, the to-be-forwarded data packet can thus be forwarded to an external background server through the network port.

Step 512: the processor creates connection information according to the request message, and determines information of the background server included in the connection information based on a preset balance scheduling rule if the connection information matching the request message is not found by the processor.

In an optional implementation, if the connection information matching the request message is not found by the processor in the full connection table, it means that the network load balancer does not store the connection information corresponding to the request message. Therefore, the processor may create the connection information corresponding to the request message. Therefore, when the network load balancer receives the corresponding request message again, the network load balancer can forward the request message to the background server based on the connection information corresponding to the request message, thereby improving the processing speed of the request message.

Among them, the processor may further determine the information of the background server corresponding to the request message based on a preset balance scheduling rule, so as to store the determined information of the background server in the connection information of the request message, where the information of the background server may be, for example, the identifier of the background server. For example, the background server can be distributed for the current request message according to the quantity of request messages processed in each background server.

Step 513: store the newly created connection information in the full connection table.

Further, the processor may further store the newly created connection information in the full connection table.

In an optional implementation, the network load balancer may be provided with two intermediate chips, a first-level intermediate chip is connected to the network port, the first-level intermediate chip is a programmable switch chip, and a second-level intermediate chip is a field programmable gate array FPGA chip.

In this system architecture, the connection information is stored in the connection tables of the programmable switch chip and the FPGA, so that a data packet is directly forwarded after the connection matching is completed in the hardware, thereby reducing the pressure on the network load balancer and improving the overall performance of the system. In this way, a two-level connection table composed of a programmable switch chip and an FPGA chip can be used for fast data packet processing, and the processing performance of the network load balancer can be improved.

In an optional implementation, after a new connection is created, the processor can continue to monitor activity information of the new connection, and when the activity information of the new connection changes, the new connection can be distributed to the intermediate chip according to the activity information of the new connection.

In the following, a detailed embodiment is used to illustrate the solution, which is specifically illustrated by taking a network load balancer provided with a programmable switch chip and an FPGA chip as an example.

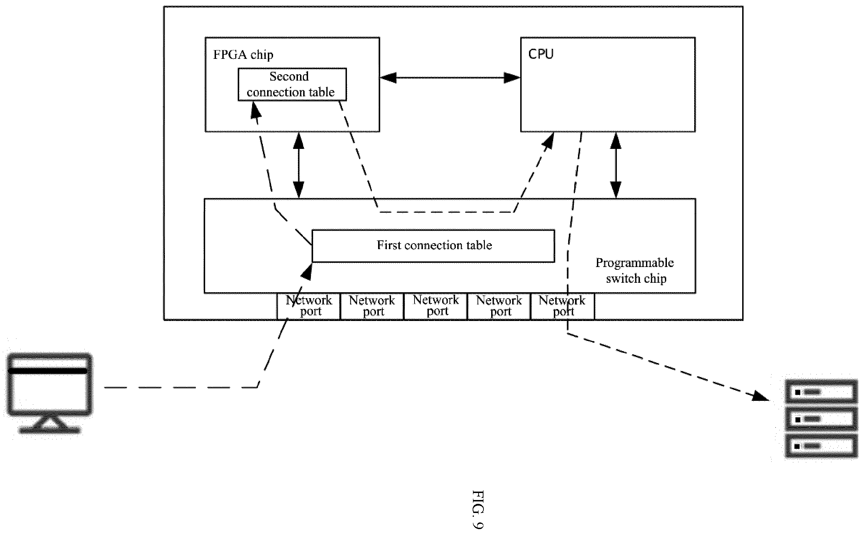

FIG. 9 is a schematic diagram of processing a request message by the network load balancer shown in a fourth exemplary embodiment of the present disclosure.

As shown in FIG. 9, when connection information corresponding to the request message is not stored in the network load balancer, after the request message enters the programmable switch chip from the network port, since there is no connection information matching the request message in the programmable switch chip, the programmable switch chip transmits the request message to the FPGA chip. Since there is no connection information matching the request message in the FPGA chip, the FPGA chip can return the request message to the programmable switch chip, and the programmable switch chip transmits a request message to the processor CPU. Since there is no connection information matching the request message in the CPU, the CPU can create connection information matching the request message, and determine a background server corresponding to the connection information, and then the programmable switch chip transmits the request message to the background server through the network port.

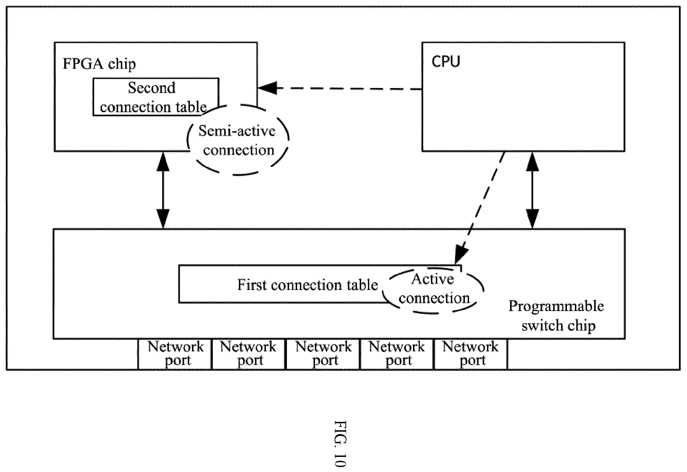

FIG. 10 is a schematic diagram of processing a request message by the network load balancer shown in a fifth exemplary embodiment of the present disclosure.

As shown in FIG. 10, the CPU can unload the connection information to the programmable switch chip and the FPGA chip according to the activity information of each connection information. Specifically, an active connection can be unloaded to the programmable switch chip, and a semi-active connection can be unloaded to the FPGA chip. For inactive connections, the CPU does not unload them.

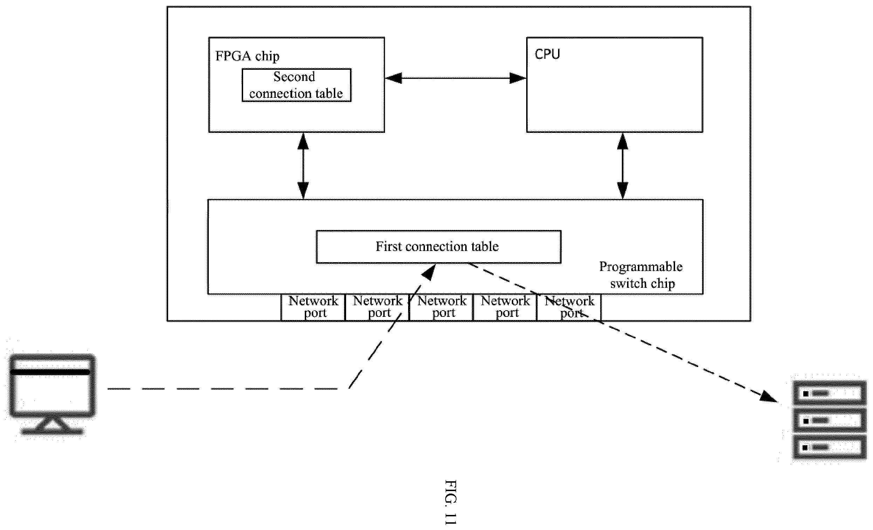

FIG. 11 is a schematic diagram of processing a request message by the network load balancer shown in a sixth exemplary embodiment of the present disclosure.

As shown in FIG. 11, it is assumed that the connection information corresponding to the request message received by the network load balancer is stored in the programmable switch chip. The request message received by the network load balancer can be forwarded from the network port to the programmable switch chip, and then the programmable switch chip forwards the request message to the background server according to the connection information matching the request message.

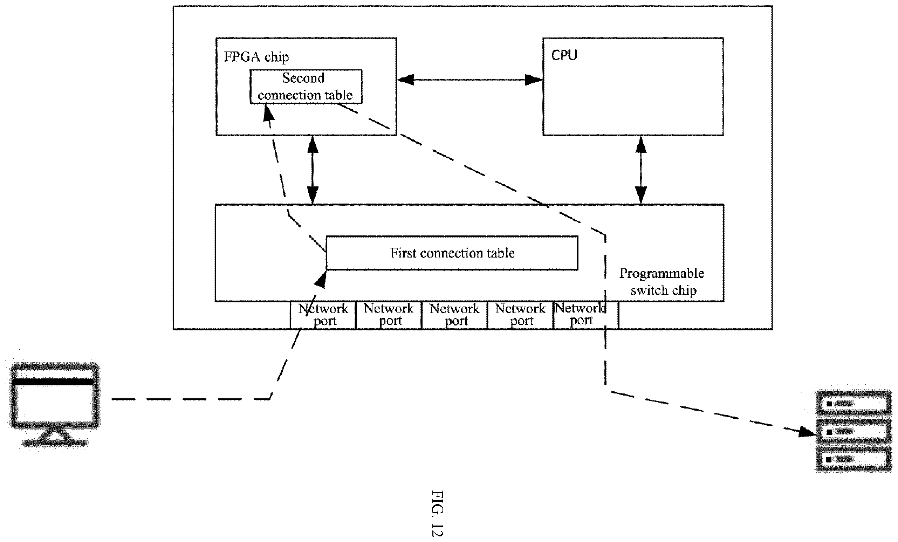

FIG. 12 is a schematic diagram of processing a request message by the network load balancer shown in a seventh exemplary embodiment of the present disclosure.

As shown in FIG. 12, it is assumed that the connection information corresponding to the request message received by the network load balancer is stored in the FPGA chip. The request message received by the network load balancer can be forwarded from the network port to the programmable switch chip, and then the programmable switch chip forwards the request message to the FPGA chip and the FPGA chip forwards the request message to the background server according to the connection information matching the request message. Specifically, the request message can be forwarded to the background server through the programmable switch chip and the network port.

In an embodiment of the present disclosure, a request message distribution method is further provided, and the method is applied to a network load balancer, the network load balancer includes: a network port and N intermediate chips; the N intermediate chips are connected in sequence; the network port is connected to a first intermediate chip among the N intermediate chips; N is a positive integer greater than or equal to 1; the method includes:
receiving, by the network port, a request message, and forwarding, by the network port, the request message to the first intermediate chip;
forwarding, by the intermediate chip, the request message to a next intermediate chip connected to a current intermediate chip if connection information matching the request message is not found; and transmitting, by the intermediate chip, the request message to a background server according to the connection information if the connection information matching the request message is found.

The network load balancer further includes a processor, and the method further includes:
forwarding, by the first intermediate chip among the N intermediate chips, the request message to the processor if the connection information matching the request message is not found by all of the intermediate chips; and
transmitting, by the processor, the request message to the background server.

In another embodiment of the present disclosure, the transmitting, the processor, the request message to the background server includes:
querying the connection information matching the request message in a stored full connection table; and
transmitting the request message to the background server according to the queried connection information matching the request message.

In another embodiment of the present disclosure, the request message distribution method further includes:
acquiring, by the intermediate chip, address information from the request message, and querying, by the intermediate chip, the connection information matching the request message in a connection table stored in the current intermediate chip according to the address information;
where the connection table stored in each of the intermediate chips corresponds to each of the intermediate chips one by one, and the connection table stored in the intermediate chip is configured to indicate a corresponding relationship between address information and connection information.

Where the network load balancer further includes a processor, the processor is provided with a full connection table, and the full connection table includes a plurality pieces of connection information; the method further includes:
acquiring, by the processor, activity information of each connection information in the full connection table; and
storing, by the processor, the connection information in the connection table of the intermediate chip according to the activity information of each connection information and a level of each of the intermediate chips.

Where the storing, by the processor, the connection information in the connection table of the intermediate chip according to the activity information of each connection information and the level of each of the intermediate chips includes:
characterizing, by the processor, activity information as active connection information, and storing, by the processor, the activity information in a connection table of a first-level intermediate chip; and
characterizing, by the processor, activity information as semi-active connection information, and storing, by the processor, the activity information in a connection table of a second-level intermediate chip.

Where the connection information matching the request message is used to indicate the background server that receives the request message.

Where the method further includes:
if the connection information matching the request message is not found by the processor, creating, by the processor, connection information according to the request message, and determining, by the processor, information of the background server included in the connection information based on a preset balance scheduling rule; and
storing, by the processor, the newly created connection information in the full connection table.

Where the transmitting, by the intermediate chip, the request message to the background server according to the connection information includes:
performing, by the intermediate chip, forwarding processing on the request message according to the connection information to obtain a to-be-forwarded data packet;
if the intermediate chip is the first intermediate chip among the N intermediate chips, transmitting, by the intermediate chip, the to-be-forwarded data packet to the background server through the network port; and
if the intermediate chip is not the first intermediate chip among the N intermediate chips, forwarding, by the intermediate chip, the to-be-forwarded data packet to the first intermediate chip among the N intermediate chips, and then transmitting, by the first intermediate chip, the to-be-forwarded data packet to the background server through the network port.

Where the transmitting the request message to the background server includes:
performing forwarding processing on the request message according to the connection information to obtain a to-be-forwarded data packet;
transmitting the to-be-forwarded data packet to an intermediate chip connected to the network port; and
transmitting, by the intermediate chip connected to the network port, the to-be-forwarded data packet to the background server through the network port.

The present disclosure further provides a service system, including: any network load balancer as described above and a cluster server, and the cluster server includes a background server;
the network load balancer is configured to receive a request message transmitted by a user terminal, and determine a target background server configured to process the request message in the cluster server;
the network load balancer is further configured to transmit the request message to the target background server.

The present disclosure provides a network load balancer, a request message distribution method, a program product and a system, which are applied to cloud computing technology in computer technology.

In the technical solution of the present disclosure, the acquisition, storage, and application of the user's personal information involved are in compliance with relevant laws and regulations, and do not violate public order and good customs.

According to an embodiment of the present disclosure, the present disclosure further provides a non-transitory computer-readable storage medium storing computer instructions, where the computer instructions are used to cause a computer to execute any of the methods as described above.

According to an embodiment of the present disclosure, the present disclosure further provides a computer program product, the computer program product includes: a computer program, the computer program is stored in a readable storage medium, and at least one processor of a network load balancer can read the computer program from the readable storage medium, and the at least one processor executes the computer program to cause the network load balancer to execute the solution provided in any of the foregoing embodiments.

Various implementations of the systems and technologies described herein can be implemented in digital electronic circuit systems, integrated circuit systems, field programmable gate arrays (FPGA), application specific integrated circuits (ASIC), application specific standard products (ASSP), system-on-chips (SOC), load programmable logic devices (CPLD), computer hardware, firmware, software, and/or combinations thereof. These various implementations may include implementing in one or more computer programs that can be executed and/or interpreted on a programmable system including at least one programmable processor, which can be a special purpose or general purpose programmable processor and can receive data and instructions from and transmit data and instructions to the storage system, at least one input apparatus, and at least one output apparatus.

The program codes used to implement the method of the present disclosure can be written in any combination of one or more programming languages. These program codes can be provided to processors or controllers of general-purpose computers, special-purpose computers, or other programmable data processing devices, so that when the program codes are executed by the processors or controllers, the functions/operations specified in the flowcharts and/or block diagrams are implemented. The program codes can be executed entirely on the machine, partly executed on the machine, partly executed on the machine and partly executed on a remote machine as an independent software package, or entirely executed on the remote machine or server.

In the context of the present disclosure, a machine-readable medium may be a tangible medium that may contain or store a program for use by or in combination with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combinations of the above. More specific examples of machine-readable storage medium might include electrical connections based on one or more wires, portable computer disks, hard disks, random access memories (RAM), read-only memories (ROM), erasable programmable read-only memories (EPROM or flash memory), optical fibers, portable compact disk read-only memories (CD-ROM), optical storage devices, magnetic storage devices, or any suitable combination of the above.

In order to provide interaction with the user, the systems and techniques described herein can be implemented on a computer that has: a display apparatus for displaying information to the user (for example, a CRT (cathode ray tube) or an LCD (liquid-crystal display) monitor); and a keyboard and a pointing apparatus (for example, a mouse or a trackball) through which the user can provide input to the computer. Other types of apparatuses can also be used to provide interaction with the user; for example, the feedback provided to the user can be any form of sensory feedback (for example, visual feedback, auditory feedback, or tactile feedback); and can be in any form (including acoustic input, voice input, or tactile input) to receive input from the user.

The systems and technologies described herein can be implemented in a computing system that includes a background component (for example, as a data server), or a computing system that includes a middleware component (for example, an application server), or a computing system that includes a front-end component (for example, a user computer with a graphical user interface or web browser through which the user can interact with the implementation of the system and technique described herein), or a computing system includes any combination of such background component, middleware component, or front-end component. The components of the system can be connected to each other through any form or medium of digital data communication (for example, a communication network). Examples of communication networks include: a local area network (LAN), a wide area network (WAN), and the Internet.

The computer system can include a client and a server. The client and server are generally remote from each other and usually interact through a communication network. The relationship between the client and the server is generated by computer programs that run on the corresponding computers and have a client-server relationship with each other. The server can be a cloud server (also known as a cloud computing server or a cloud host), a host product in the cloud computing service system to solve the defects of difficult management and weak business scalability in traditional physical hosts and VPS services ("Virtual Private Server", or "VPS" for short). The server can also be a server of a distributed system, or a server combined with a blockchain.

It should be understood that the various forms of processes shown above can be used to reorder, add or delete steps. For example, the steps recited in the present application can be executed in parallel, sequentially or in a different order. So long as the desired result of the technical solution disclosed in the present disclosure can be achieved, no limitation is made herein.

The above-mentioned detailed description does not limit the scope of protection of the present disclosure. It should be understood by those skilled in the art that various modifications, combinations, subcombinations and substitutions can be made according to design requirements and other factors. Any modification, equivalent replacement, improvement and the like made within the principle of the present disclosure shall be included in the scope of protection of the present disclosure.

## Claims

1. A network load balancer (13), comprising: a network port (21) and N intermediate chips (221-22N), N is a positive integer greater than or equal to 1; when N>1, the N intermediate chips (221-22N) are connected in sequence; the network port (21) is connected to a first intermediate chip (221) among the N intermediate chips (221-22N);
the network port (21) is configured to receive a request message and forward the request message to the first intermediate chip (221);
each of the intermediate chips (221-22N) is configured to forward the request message to a next intermediate chip connected to a current intermediate chip if connection information matching the request message is not found; and directly transmit the request message to a background server (11) according to the connection information if the connection information matching the request message is found;
the network load balancer (13) further comprises a processor (24);
the first intermediate chip (221) among the N intermediate chips (221-22N) is configured to forward the request message to the processor (24) if the connection information matching the request message is not found by all of the intermediate chips (221-22N), wherein the processor (24) is configured to transmit the request message to the background server (11);
when the processor (24) transmits the request message to the background server (11), the processor (24) is specifically configured to:
query the connection information matching the request message in a stored full connection table; and
transmit the request message to the background server (11) according to the queried connection information matching the request message;
wherein each of the intermediate chips (221-22N) is specifically configured to:
acquire address information from the request message, and query the connection information matching the request message in a connection table stored in the current intermediate chip according to the address information;
wherein the connection table stored in each of the intermediate chips (221-22N) corresponds to each of the intermediate chips (221-22N) one by one, and the connection table stored in the intermediate chip is configured to indicate a corresponding relationship between address information and connection information.

2. The network load balancer (13) according to claim 1, wherein the processor (24) is provided with a full connection table, and the full connection table comprises a plurality pieces of connection information; the processor (24) is configured to:
acquire activity information of each connection information in the full connection table; and
store the connection information in the connection table of the intermediate chip according to the activity information of each connection information and a level of each of the intermediate chips (221-22N).

3. The network load balancer (13) according to claim 1 or 2, wherein the connection information matching the request message is used to indicate the background server (11) that receives the request message.

4. The network load balancer (13) according to claim 1, wherein the processor (24) is specifically configured to:
if the connection information matching the request message is not found, create connection information according to the request message, and determine information of the background server (11) comprised in the connection information based on a preset balance scheduling rule; and
store the newly created connection information in the full connection table.

5. The network load balancer (13) according to any one of claims 1-4, wherein when the intermediate chip transmits the request message to the background server (11) according to the connection information, the intermediate chip is specifically configured to:
perform forwarding processing on the request message according to the connection information to obtain a to-be-forwarded data packet;
if the intermediate chip is the first intermediate chip (221) among the N intermediate chips (221-22N), the intermediate chip transmits the to-be-forwarded data packet to the background server (11) through the network port (21); and
if the intermediate chip is not the first intermediate chip (221) among the N intermediate chips (221-22N), the intermediate chip forwards the to-be-forwarded data packet to the first intermediate chip (221) among the N intermediate chips (221-22N), so that the first intermediate chip (221) transmits the to-be-forwarded data packet to the background server (11) through the network port (21).

6. The network load balancer (13) according to claim 1, wherein when the processor (24) transmits the request message to the background server (11), the processor (24) is specifically configured to:
perform forwarding processing on the request message according to the connection information to obtain a to-be-forwarded data packet and transmit the to-be-forwarded data packet to an intermediate chip connected to the network port (21), so that the intermediate chip connected to the network port (21) transmits the to-be-forwarded data packet to the background server (11) through the network port (21).

7. The network load balancer (13) according to any one of claims 1-6, wherein two intermediate chips are provided, a first-level intermediate chip is connected to the network port (21), the first-level intermediate chip is a programmable switch chip, and a second-level intermediate chip is a field programmable gate array chip.

8. A request message distribution method applied to a network load balancer, wherein the network load balancer comprises: a network port and N intermediate chips, N is a positive integer greater than or equal to 1; when N>1, the N intermediate chips are connected in sequence; the network port is connected to a first intermediate chip among the N intermediate chips; the network load balancer further comprises a processor; the method comprises:
receiving (301, 503), by the network port, a request message, and forwarding, by the network port, the request message to the first intermediate chip (221);
forwarding (302), by the intermediate chip, the request message to a next intermediate chip connected to a current intermediate chip if connection information matching the request message is not found; and directly
transmitting, by the intermediate chip, the request message to a background server according to the connection information if the connection information matching the request message is found;
forwarding (509), by the first intermediate chip among the N intermediate chips, the request message to the processor if the connection information matching the request message is not found by all of the intermediate chips; and
transmitting, by the processor, the request message to the background server;
wherein the transmitting, by the processor, the request message to the background server comprises:
querying (510) the connection information matching the request message in a stored full connection table; and
transmitting (511) the request message to the background server according to the queried connection information matching the request message;
the method further comprises:
acquiring (504), by the intermediate chip, address information from the request message, and querying, by the intermediate chip, the connection information matching the request message in a connection table stored in the current intermediate chip according to the address information;
wherein the connection table stored in each of the intermediate chips corresponds to each of the intermediate chips one by one, and the connection table stored in the intermediate chip is configured to indicate a corresponding relationship between address information and connection information.

9. A non-transitory computer-readable storage medium storing computer instructions, wherein the computer instructions are used to cause the network load balancer (13) according to any one of claims 1-7 to execute the method according to claim 8.

10. A computer program product comprising a computer program, when the computer program is executed by the network load balancer (13) according to any one of claims 1-7, the method according to claim 8 is implemented.

11. A service system, comprising: a network load balancer (13) according to any one of claims 1-7 and a cluster server, and the cluster server comprises a background server (11);
the network load balancer (13) is configured to receive a request message transmitted by a user terminal (12), and determine a target background server configured to process the request message in the cluster server;
the network load balancer (13) is further configured to transmit the request message to the target background server.

## Patentansprüche

1. Netzwerklastverteiler (13), umfassend: einen Netzwerkanschluss (21) und N Zwischenchips (221-22N), wobei N eine positive ganze Zahl größer oder gleich 1 ist; wenn N>1, die N Zwischenchips (221-22N) in Folge verbunden sind; der Netzwerkanschluss (21) mit einem ersten Zwischenchip (221) unter den N Zwischenchips (221-22N) verbunden ist;
der Netzwerkanschluss (21) dazu konfiguriert ist, eine Anforderungsnachricht zu empfangen und die Anforderungsnachricht an den ersten Zwischenchip (221) weiterzuleiten;
jeder der Zwischenchips (221-22N) dazu konfiguriert ist, die Anforderungsnachricht an einen nächsten Zwischenchip weiterzuleiten, der mit einem aktuellen Zwischenchip verbunden ist, wenn Verbindungsinformationen, die mit der Anforderungsnachricht übereinstimmen, nicht gefunden werden; und die Anforderungsnachricht gemäß den Verbindungsinformationen an einen Hintergrundserver (11) direkt zu übertragen, wenn die Verbindungsinformationen, die mit der Anforderungsnachricht übereinstimmen, gefunden werden;
der Netzwerklastverteiler (13) ferner einen Prozessor (24) umfasst;
der erste Zwischenchip (221) unter den N Zwischenchips (221-22N) dazu konfiguriert ist, die Anforderungsnachricht an den Prozessor (24) weiterzuleiten, wenn die Verbindungsinformationen, die mit der Anforderungsnachricht übereinstimmen, nicht von allen Zwischenchips (221-22N) gefunden werden, wobei der Prozessor (24) dazu konfiguriert ist, die Anforderungsnachricht an den Hintergrundserver (11) zu übertragen;
wenn der Prozessor (24) die Anforderungsnachricht an den Hintergrundserver (11) überträgt, der Prozessor (24) speziell konfiguriert ist, zum:
Abfragen der Verbindungsinformationen, die mit der Anforderungsnachricht übereinstimmen, aus einer gespeicherten vollständigen Verbindungstabelle; und
Übertragen der Anforderungsnachricht an den Hintergrundserver (11) gemäß der abgefragten Verbindungsinformationen, die mit der Anforderungsnachricht übereinstimmen;
wobei jeder der Zwischenchips (221-22N) speziell konfiguriert ist, zum:
Erhalten von Adressinformationen aus der Anforderungsnachricht und Abfragen der Verbindungsinformationen, die mit der Anforderungsnachricht übereinstimmen, aus einer in dem aktuellen Zwischenchip gespeicherten Verbindungstabelle gemäß den Adressinformationen;
wobei die in jedem der Zwischenchips (221-22N) gespeicherte Verbindungstabelle jedem der Zwischenchips (221-22N) einzeln entspricht, und die in dem Zwischenchip gespeicherte Verbindungstabelle dazu konfiguriert ist, eine entsprechende Beziehung zwischen Adressinformationen und Verbindungsinformationen anzuzeigen.

2. Netzwerklastverteiler (13) nach Anspruch 1, wobei der Prozessor (24) mit einer vollständigen Verbindungstabelle versehen wird und die vollständige Verbindungstabelle eine Mehrzahl von Teilen von Verbindungsinformationen umfasst; der Prozessor (24) konfiguriert ist, zum:
Erhalten von Aktivitätsinformationen von jeden Verbindungsinformationen in der vollständigen Verbindungstabelle; und
Speichern der Verbindungsinformationen in der Verbindungstabelle des Zwischenchips gemäß den Aktivitätsinformationen jeder Verbindungsinformationen und einem Niveau jedes der Zwischenchips (221-22N).

3. Netzwerklastverteiler (13) nach Anspruch 1 oder 2, wobei die Verbindungsinformationen, die mit der Anforderungsnachricht übereinstimmen, verwendet werden, um den Hintergrundserver (11) anzugeben, der die Anforderungsnachricht empfängt.

4. Netzwerklastverteiler (13) nach Anspruch 1, wobei der Prozessor (24) speziell konfiguriert ist, zum:
wenn die Verbindungsinformationen, die mit der Anforderungsnachricht übereinstimmen, nicht gefunden werden, Erstellen von Verbindungsinformationen gemäß der Anforderungsnachricht und Bestimmen von Informationen des Hintergrundservers (11), die in den Verbindungsinformationen enthalten sind, auf Grundlage einer voreingestellten Verteilungsplanungsregel; und
Speichern der neu erstellen Verbindungsinformationen in der vollständigen Verbindungstabelle.

5. Netzwerklastverteiler (13) nach einem der Ansprüche 1-4, wobei, wenn der Zwischenchip die Anforderungsnachricht an den Hintergrundserver (11) gemäß den Verbindungsinformationen überträgt, der Zwischenchip speziell konfiguriert ist, zum:
Durchführen der Weiterleitungsverarbeitung der Anforderungsnachricht gemäß den Verbindungsinformationen, um ein weiterzuleitendes Datenpaket zu erhalten;
wenn der Zwischenchip der erste Zwischenchip (221) unter den N Zwischenchips (221-22N) ist, der Zwischenchip das weiterzuleitende Datenpaket über den Netzwerkanschluss (21) an den Hintergrundserver (11) überträgt; und
wenn der Zwischenchip nicht der erste Zwischenchip (221) unter den N Zwischenchips (221-22N) ist, der Zwischenchip das weiterzuleitende Datenpaket an den ersten Zwischenchip (221) unter den N Zwischenchips (221-22N) weiterleitet, sodass der erste Zwischenchip (221) das weiterzuleitende Datenpaket an den Hintergrundserver (11) über den Netzwerkanschluss (21) überträgt.

6. Netzwerklastverteiler (13) nach Anspruch 1, wobei der Prozessor (24), wenn der Prozessor (24) die Anforderungsnachricht an den Hintergrundserver (11) überträgt, speziell konfiguriert ist, zum:
Durchführen einer Weiterleitungsverarbeitung der Anforderungsnachricht gemäß den Verbindungsinformationen, um ein weiterzuleitendes Datenpaket zu erhalten, und Übertragen des weiterzuleitenden Datenpakets an einen mit dem Netzwerkanschluss (21) verbundenen Zwischenchip, sodass der mit dem Netzwerkanschluss (21) verbundene Zwischenchip das weiterzuleitende Datenpaket über den Netzwerkanschluss (21) an den Hintergrundserver (11) überträgt.

7. Netzwerklastvergleicher (13) nach einem der Ansprüche 1-6, wobei zwei Zwischenchips bereitgestellt werden, ein Zwischenchip der ersten Ebene mit dem Netzwerkanschluss (21) verbunden ist, der Zwischenchip der ersten Ebene ein programmierbarer Schalterchip ist und ein Zwischenchip der zweiten Ebene ein feldprogrammierbarer Gate-Array-Chip ist.

8. Verfahren zum Verteilen einer Anforderungsnachricht, das auf einen Netzwerklastverteiler angewendet wird, wobei der Netzwerklastverteiler umfasst: einen Netzwerkanschluss und N Zwischenchips, wobei N eine positive ganze Zahl größer oder gleich 1 ist; wenn N>1, die N Zwischenchips in Folge verbunden sind; der Netzwerkanschluss mit einem ersten Zwischenchip unter den N Zwischenchips verbunden ist; der Netzwerklastverteiler ferner einen Prozessor umfasst; das Verfahren umfasst:
Empfangen (301, 503) einer Anforderungsnachricht durch den Netzwerkanschluss und Weiterleiten der Anforderungsnachricht durch den Netzwerkanschluss an den ersten Zwischenchip (221);
Weiterleiten (302) der Anforderungsnachricht durch den Zwischenchip an einen nächsten Zwischenchip, der mit einem aktuellen Zwischenchip verbunden ist, wenn keine Verbindungsinformationen gefunden werden, die mit der Anforderungsnachricht übereinstimmen; und
direktes Übertragen der Anforderungsnachricht durch den Zwischenchip an einen Hintergrundserver gemäß den Verbindungsinformationen, wenn die Verbindungsinformationen, die mit der Anforderungsnachricht übereinstimmen, gefunden werden;
Weiterleiten (509) der Anforderungsnachricht durch den ersten Zwischenchip unter den N Zwischenchips an den Prozessor, wenn die Verbindungsinformationen, die mit der Anforderungsnachricht übereinstimmen, nicht von allen Zwischenchips gefunden werden; und
Übertragen der Anforderungsnachricht durch den Prozessor an den Hintergrundserver;
wobei das Übertragen der Anforderungsnachricht durch den Prozessor an den Hintergrundserver umfasst:
Abfragen (510) der Verbindungsinformationen, die mit der Anforderungsnachricht übereinstimmen, aus einer gespeicherten vollständigen Verbindungstabelle; und
Übertragen (511) der Anforderungsnachricht an den Hintergrundserver gemäß der abgefragten Verbindungsinformationen, die mit der Anforderungsnachricht übereinstimmen;
wobei das Verfahren ferner umfasst:
Erhalten (504) durch den Zwischenchip von Adressinformationen aus der Anforderungsnachricht und Abfragen durch den Zwischenchip der Verbindungsinformationen, die mit der Anforderungsnachricht übereinstimmen, aus einer in dem aktuellen Zwischenchip gespeicherten Verbindungstabelle gemäß den Adressinformationen;
wobei die in jedem der Zwischenchips gespeicherte Verbindungstabelle jedem der Zwischenchips einzeln entspricht, und die in dem Zwischenchip gespeicherte Verbindungstabelle dazu konfiguriert ist, eine entsprechende Beziehung zwischen Adressinformationen und Verbindungsinformationen anzuzeigen.

9. Nichtflüchtiges computerlesbares Speichermedium, das Computeranweisungen speichert, wobei die Computeranweisungen verwendet werden, um den Netzwerklastverteiler (13) nach einem der Ansprüche 1-7 zu veranlassen, das Verfahren nach Anspruch 8 auszuführen.

10. Computerprogrammprodukt, umfassend ein Computerprogramm, wobei das Verfahren nach Anspruch 8 implementiert wird, wenn das Computerprogramm von dem Netzwerklastverteiler (13) nach einem der Ansprüche 1-7 ausgeführt wird.

11. Dienstsystem, umfassend: einen Netzwerklastverteiler (13) nach einem der Ansprüche 1-7 und einen Clusterserver, und wobei der Clusterserver einen Hintergrundserver (11) umfasst;
der Netzwerklastverteiler (13) dazu konfiguriert ist, eine Anforderungsnachricht, die durch eine Benutzerstation (12) übertragen wird, zu empfangen und einen Zielhintergrundserver zu bestimmen, der dazu konfiguriert ist, die Anforderungsnachricht in dem Clusterserver zu verarbeiten;
der Netzwerklastverteiler (13) ferner dazu konfiguriert ist, die Anforderungsnachricht an den Zielhintergrundserver zu übertragen.

## Revendications

1. Équilibreur de charge de réseau (13), comprenant : un port de réseau (21) et N puces intermédiaires (221-22N), N est un nombre entier positif supérieur ou égal à 1 ; lorsque N>1, les N puces intermédiaires (221-22N) sont connectées en séquence ; le port de réseau (21) est connecté à une première puce intermédiaire (221) parmi les N puces intermédiaires (221-22N) ;
le port de réseau (21) est configuré pour recevoir un message de demande et réacheminer le message de demande jusqu'à la première puce intermédiaire (221) ;
chacune des puces intermédiaires (221-22N) est configurée pour réacheminer le message de demande jusqu'à une puce intermédiaire suivante connectée à une puce intermédiaire actuelle si des informations de connexion assorties au message de demande ne sont pas trouvées ; et transmettre directement le message de demande à un serveur d'arrière-plan (11) selon les informations de connexion si les informations de connexion assorties au message de demande sont trouvées ;
l'équilibreur de charge de réseau (13) comprend en outre un processeur (24) ;
la première puce intermédiaire (221) parmi les N puces intermédiaires (221-22N) est configurée pour réacheminer le message de demande jusqu' au processeur (24) si les informations de connexion assorties au message de demande ne sont pas trouvées par la totalité des puces intermédiaires (221-22N), dans lequel le processeur (24) est configuré pour transmettre le message de demande au serveur d'arrière-plan (11) ;
lorsque le processeur (24) transmet le message de demande au serveur d'arrière-plan (11), le processeur (24) est spécifiquement configuré pour :
interroger les informations de connexion assorties au message de demande dans une table de connexion complète stockée ; et
transmettre le message de demande au serveur d'arrière-plan (11) selon les informations de connexion interrogées assorties au message de demande ;
dans lequel chacune des puces intermédiaires (221-22N) est spécifiquement configurée pour :
acquérir des informations d'adresse à partir du message de demande, et interroger les informations de connexion assorties au message de demande dans une table de connexion stockée dans la puce intermédiaire actuelle selon les informations d'adresse ;
dans lequel la table de connexion stockée dans chacune des puces intermédiaires (221-22N) correspond à chacune des puces intermédiaires (221-22N) une par une, et la table de connexion stockée dans la puce intermédiaire est configurée pour indiquer une relation correspondante entre des informations d'adresse et des informations de connexion.

2. Équilibreur de charge de réseau (13) selon la revendication 1, dans lequel le processeur (24) est pourvu d'une table de connexion complète, et la table de connexion complète comprend une pluralité d'éléments d'informations de connexion ; le processeur (24) est configuré pour :
acquérir des informations d'activité de chaque élément d'informations de connexion dans la table de connexion complète ; et
stocker les informations de connexion dans la table de connexion de la puce intermédiaire selon les informations d'activité de chaque élément d'informations de connexion et un niveau de chacune des puces intermédiaires (221-22N).

3. Équilibreur de charge de réseau (13) selon la revendication 1 ou 2, dans lequel les informations de connexion assorties au message de demande sont utilisées pour indiquer le serveur d'arrière-plan (11) qui reçoit le message de demande.

4. Équilibreur de charge de réseau (13) selon la revendication 1, dans lequel le processeur (24) est spécifiquement configuré pour :
si les informations de connexion assorties au message de demande ne sont pas trouvées, créer des informations de connexion selon le message de demande, et déterminer des informations du serveur d'arrière-plan (11) comprises dans les informations de connexion sur la base d'une règle d'ordonnancement d'équilibre prédéfinie ; et
stocker les informations de connexion nouvellement créées dans la table de connexion complète.

5. Équilibreur de charge de réseau (13) selon l'une quelconque des revendications 1 à 4, dans lequel, lorsque la puce intermédiaire transmet le message de demande au serveur d'arrière-plan (11) selon les informations de connexion, la puce intermédiaire est spécifiquement configurée pour :
réaliser le traitement de réacheminement sur le message de demande selon les informations de connexion pour obtenir un paquet de données destiné à être réacheminé ;
si la puce intermédiaire est la première puce intermédiaire (221) parmi les N puces intermédiaires (221-22N), la puce intermédiaire transmet le paquet de données destiné à être réacheminé au serveur d'arrière-plan (11) par l'intermédiaire du port de réseau (21) ; et
si la puce intermédiaire n'est pas la première puce intermédiaire (221) parmi les N puces intermédiaires (221-22N), la puce intermédiaire réachemine le paquet de données destiné à être réacheminé jusqu'à la première puce intermédiaire (221) parmi les N puces intermédiaires (221-22N), pour que la première puce intermédiaire (221) transmette le paquet de données destiné à être réacheminé au serveur d'arrière-plan (11) par l'intermédiaire du port de réseau (21).

6. Équilibreur de charge de réseau (13) selon la revendication 1, dans lequel, lorsque le processeur (24) transmet le message de demande au serveur d'arrière-plan (11), le processeur (24) est spécifiquement configuré pour :
réaliser le traitement de réacheminement sur le message de demande selon les informations de connexion pour obtenir un paquet de données destiné à être réacheminé et transmettre le paquet de données destiné à être réacheminé à une puce intermédiaire connectée au port de réseau (21), pour que la puce intermédiaire connectée au port de réseau (21) transmette le paquet de données destiné à être réacheminé au serveur d'arrière-plan (11) par l'intermédiaire du port de réseau (21).

7. Équilibreur de charge de réseau (13) selon l'une quelconque des revendications 1 à 6, dans lequel deux puces intermédiaires sont prévues, une puce intermédiaire de premier niveau est connectée au port de réseau (21), la puce intermédiaire de premier niveau est une puce de commutation programmable, et une puce intermédiaire de second niveau est une puce de réseau logique programmable par utilisateur.

8. Procédé de distribution de message de demande appliqué sur un équilibreur de charge de réseau, dans lequel l'équilibreur de charge de réseau comprend : un port de réseau et N puces intermédiaires, N est un nombre entier positif supérieur ou égal à 1 ; lorsque N>1, les N puces intermédiaires sont connectées en séquence ; le port de réseau est connecté à une première puce intermédiaire parmi les N puces intermédiaires ; l'équilibreur de charge de réseau comprend en outre un processeur ; le procédé comprend :
la réception (301, 503), par le port de réseau, d'un message de demande, et le réacheminement, par le port de réseau, du message de demande jusqu'à la première puce intermédiaire (221) ;
le réacheminement (302), par la puce intermédiaire, du message de demande jusqu'à une puce intermédiaire suivante connectée à une puce intermédiaire actuelle si des informations de connexion assorties au message de demande ne sont pas trouvées ; et la transmission directe, par la puce intermédiaire, du message de demande à un serveur d'arrière-plan selon les informations de connexion si les informations de connexion assorties au message de demande sont trouvées ;
le réacheminement (509), par la première puce intermédiaire parmi les N puces intermédiaires, du message de demande jusqu'au processeur si les informations de connexion assorties au message de demande ne sont pas trouvées par la totalité des puces intermédiaires ; et
la transmission, par le processeur, du message de demande au serveur d'arrière-plan ;
dans lequel la transmission, par le processeur, du message de demande au serveur d'arrière-plan comprend :
l'interrogation (510) des informations de connexion assorties au message de demande dans une table de connexion complète stockée ; et
la transmission (511) du message de demande au serveur d'arrière-plan selon les informations de connexion interrogées assorties au message de demande ;
le procédé comprend en outre :
l'acquisition (504), par la puce intermédiaire, d'informations d'adresse à partir du message de demande, et l'interrogation, par la puce intermédiaire, des informations de connexion assorties au message de demande dans une table de connexion stockée dans la puce intermédiaire actuelle selon les informations d'adresse ;
dans lequel la table de connexion stockée dans chacune des puces intermédiaires correspond à chacune des puces intermédiaires une par une, et la table de connexion stockée dans la puce intermédiaire est configurée pour indiquer une relation correspondante entre des informations d'adresse et des informations de connexion.

9. Support de stockage non transitoire lisible par ordinateur, stockant des instructions d'ordinateur, dans lequel les instructions d'ordinateur sont utilisées pour faire en sorte que l'équilibreur de charge de réseau (13) selon l'une quelconque des revendications 1 à 7 exécute le procédé selon la revendication 8.

10. Produit programme d'ordinateur, comprenant un programme d'ordinateur, lorsque le programme d'ordinateur est exécuté par l'équilibreur de charge de réseau (13) selon l'une quelconque des revendications 1 à 7, le procédé selon la revendication 8 est mis en oeuvre.

11. Système de service, comprenant : un équilibreur de charge de réseau (13) selon l'une quelconque des revendications 1 à 7 et un serveur en grappe, et le serveur en grappe comprend un serveur d'arrière-plan (11) ;
l'équilibreur de charge de réseau (13) est configuré pour recevoir un message de demande transmis par un terminal d'utilisateur (12), et déterminer un serveur d'arrière-plan cible configuré pour traiter le message de demande dans le serveur en grappe ;
l'équilibreur de charge de réseau (13) est en outre configuré pour transmettre le message de demande au serveur d'arrière-plan cible.
